# EUROPÄISCHE PATENTANMELDUNG

(11) **EP 0 908 217 A1**
(43) Veröffentlichungstag der Anmeldung: **14.04.1999**
(21) Anmeldenummer: 98117313.1
(22) Anmeldetag: 12.09.1998
(51) Int. Cl.: B01D 53/00, F23J 7/00, F23J 15/00, B01D 53/68, F22B 37/48

(54) **Verfahren zur Behandlung von Rauchgas**

(30) Priorität: 07.10.1997 DE 19744247
(71) Anmelder: DEUTSCHE BABCOCK ANLAGEN GMBH, 46049 Oberhausen (DE)
(72) Erfinder: Dohmann, Joachim Dr., 46149 Oberhausen (DE); Keldenich, Kai Dr., 45134 Essen (DE); Rüben, Wilhelm, 47800 Krefeld (DE)
(74) Vertreter: Radünz, Ingo, Dipl.-Ing.

(57) **Zusammenfassung**

In einer Verbrennungsanlage wird Abfall auf einem Verbrennungsrost verbrannt. Das dabei entstehende Rauchgas wird aus einem sich oberhalb des Verbrennungsrostes befindlichen Feuerraumes einem Abhitzekessel zugeführt. In den Teil des Feuerraumes, in dem Temperaturen des Rauchgases von mehr als 950 bis 1050 °C zu erwarten sind, wird eine verdampfende Flüssigkeit, vorzugsweise Wasser eingeblasen und verdampft. Die Flüssigkeit enthält Additive, die nach der Verdampfung der Flüssigkeit als Keime für im Rauchgas vorhandene und bei niedrigeren Temperaturen desublimierende Stoffe wirken.

## Beschreibung

Die Erfindung betrifft ein verfahren zur Behandlung von Rauchgas aus einer Verbrennungsanlage mit den Merkmalen des Oberbegriffes des Anspruches 1.

Die dem Wärmeentzug dienenden Heizflächen des Abhitzekessels verschmutzen im Laufe der Betriebszeit. Durch Verschmutzung der Heizflächen nimmt der Wärmeübergangskoeffizient ab; eine Verschlechterung des Wärmeübergangs wird beobachtet. Bei als konstant angenommener Temperatur der Rauchgase bei Eintritt in den Kessel nimmt dabei die im Kessel erreichbare Abkühlung der Rauchgase (Temperaturdifferenz zwischen dem Eintritt der Rauchgase in den Kessel und dem Austritt der Rauchgase aus dem Kessel) ab. In der Folge resultiert eine geringere erzeugte Dampfmenge oder der sonst abgeführten Wärme. Der durch eine Verschmutzung auftretende verminderte Temperaturabbau bewirkt eine verminderte Auskopplung von Energie.

In ungünstigen, nicht vermiedenen oder vermeidbaren Betriebszuständen der Feuerung läßt sich eine besondere Art der Verschmutzung der festen Wände der das Rauchgas führenden Anlagenteile feststellen. Diese Verschmutzung wird in einigen Anlagen bereits im Bereich der Heizflächen festgestellt, in anderen Anlagen treten diese Verschmutzungen im Bereich der Niederschlagselektroden eines Elektroentstaubers, an den Oberflächen ggf. vorhandener Wärmetauscher oder auf Wänden der Rauchgaskanäle auf.

Diese genannte besondere Art der Verschmutzung besteht aus Ablagerungen fester Stoffe, meist anorganischer Salze, in die Flugstaub eingebunden ist. Diese Ablagerungen besitzen eine lockere, kristalline Struktur geringer Festigkeit.

Der Erfindung liegt die Aufgabe zugrunde, das gattungsgemäße Verfahren so zu gestalten, daß die Bildung von den Wärmeübergang vermindernden Ablagerungen zu verhindern oder zumindest zu verringern.

Aufgrund der morphologischen Struktur (lockeres, leichtes Gefüge) besitzen die Ablagerungen eine wärmeisolierende Wirkung. Zusätzlich tritt eine Absorption oder Reflexion der Wärmestrahlung auf, was in der Summenwirkung zu einem verschlechtertem Wärmeübertragungsverhalten der Heizflächen führt. Auf anderen festen Wänden, etwa im Bereich der Niederschlagselektroden von Elektroentstaubern oder auf Kanalwandungen können die Ablagerungen zu anderen Beeinträchtigungen der Funktion dieser Bauteile führen, etwa zu einer verschlechterten Staubabscheidung oder zu einer Erhöhung von Strömungsdruckverlusten.

Diese Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche.

Durch eine kristallographische, morphologische und chemische Begutachtung der Ablagerungen ließ sich folgern, daß diese Ablagerungen durch Desublimation von Substanzen auftreten mußten, die bei hohen Temperaturen der Rauchgase zunächst gasförmig vorliegen, und bei niederen Temperaturen etwa nach Abkühlung in der Nähe von Heizflächen als Feststoffe desublimieren. Die durch Desublimation abgeschiedenen Stoffe werden zuvor entweder durch chemische Reaktion gebildet oder durch Sublimation fester Stoffe, die ggf. in dem zu beseitigenden Müllstrom vorhanden sind bzw. im Rostaschestrom enthalten sind, in die Gasphase überführt. Die chemische Zusammensetzung der Heizflächenbeläge läßt auf den Eintrag der Substanzen in die Gasphase durch Sublimation aus den im Feuerraum befindlichen Feststoffen als den eher wahrscheinlichen Mechanismus schließen. Durch einen Vergleich von Betriebsparametern verschiedener Feuerungen und die Bewertung der Wärmeübergänge im Kessel wurde der Schluß gezogen, daß insbesondere hohe Feuerraumtemperaturen die Minderung der Wärmeübergangskoeffizienten begünstigen können.

Durch die Erfindung wird nun die Bildung von festen Verschmutzungen von Heizflächen oder von anderen festen Wänden rauchgasführender Bauteile durch Desublimation von belagbildenden Rauchgasinhaltsstoffen dadurch verhindert oder vermindert, daß die Desublimation an anderen Orten als an diesen genannten festen Wänden gezielt herbeigeführt wird. Zu diesem Zweck wird eine örtliche Abkühlung der Rauchgase in Raumbereichen herbeigeführt, die nicht in unmittelbarer Nähe von festen Wänden umgeben sind. Diese lokale Abkühlung wird durch Einbringung eines verdampfbaren Mediums, z.B. wasserhaltiger Flüssigkeiten, vorzugsweise Wasser, erreicht. Das verdampfbare Medium nimmt nach der Einbringung einen Teil der Enthalpie des Rauchgases auf, wobei sich dieses lokal abkühlt. Das Medium selbst verdampft bei diesem Vorgang. In unmittelbarer Nähe des verdampfenden Mediums stellt sich dabei eine Temperatur nahe der Siedetemperatur des Mediums ein, im Falle wäßriger Flüssigkeiten etwa 100 °C - 110°C. Bei der Abkühlung des Rauchgases können die Temperaturen des Rauchgases unter die Sublimationstemperatur der belagbildenden Substanzen gebracht werden.

Zur Erreichung einer Desublimation ist neben der Unterschreitung einer Gleichgewichtstemperatur noch die Anwesenheit von Kristallisations- oder Desublimationskeimen erforderlich. Es ist vorteilhaft, zusätzliche Desublimationskeime in die Rauchgaswege einzubringen. Diese Desublimationskeime werden in dem zu verdampfenden Medium suspendiert, oder sie werden als lösliche Substanzen in dem zu verdampfenden Medium gelöst. Die zugesetzten Stoffe werden nach der Verdampfung des Mediums freigesetzt oder kristallisieren.

Bei einer raschen Verdampfung des Mediums sind sehr feine Kristalle zu erwarten, die gute Eigenschaften als Desublimationskeime besitzen.

Es kann von Vorteil sein, wenn als nach der Verdampfung keimbildende Substanzen Stoffe eingesetzt werden, die in der Lage sind, mit im Rauchgas befindlichen Schadstoffen chemische Reaktionen einzugehen. Vorteilhaft ist die Einbringung einer Kalkmilchlösung, die beispielsweise mit Chlorwasserstoff eine Neutralisationsreaktion zeigt. Diese Reaktion führt zu einer Absenkung der Chlorwasserstoffkonzentration. Aus der chemischen Analyse der Verschmutzungen kann auf eine Beteiligung des Chlorwasserstoffs an der Bildung der den Wärmeübergang mindernden Ablagerungen geschlossen werden. Eine Reduktion der Chlorwasserstoffkonzentration kann auch durch andere Neutralisationsmittel herbeigeführt werden, insbesondere durch Hydroxide, Oxide, Carbonate oder Hydrogencarbonate von Alkali- und/oder Erdalkalimetallen.

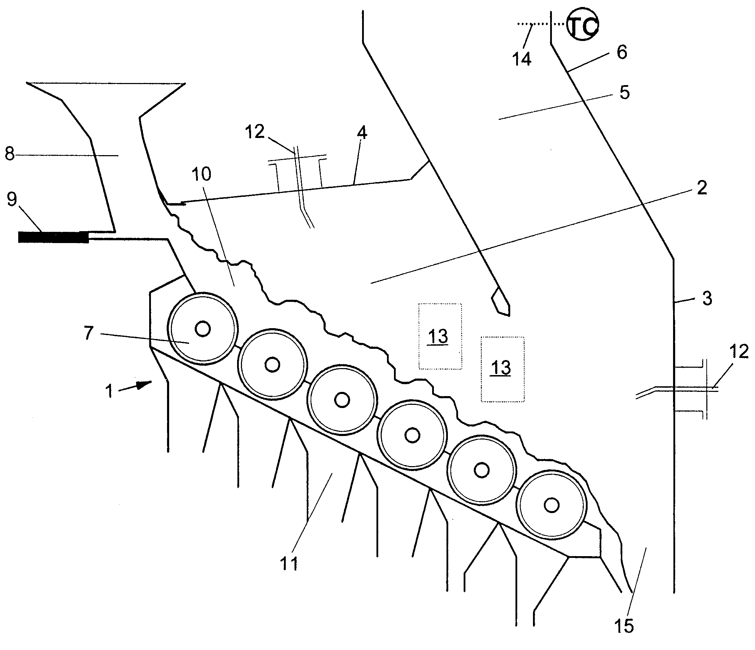

Die Erfindung sei an Hand von Ausführungsbeispielen und der Zeichnung erläutert, die eine Anlage zur Verbrennung von Abfall zeigt.

Die Verbrennungsanlage enthält einen Verbrennungsrost 1 und einen darüber liegenden Feuerraum 2. Der Feuerraum 2 ist begrenzt durch den Verbrennungsrost 1, Seitenwände, eine Rückwand 3 und eine Feuerraumdecke 4. An den Feuerraum 2 schließt sich über eine Nachbrennzone 5 ein Abhitzekessel 6 an, von dem nur der erste Kesselzug gezeigt ist.

Der Verbrennungsrost 1 ist bei der dargestellten Verbrennungsanlage aus mehreren Rostwalzen 7 gebildet, die entlang einer schrägen Ebene hintereinander angeordnet sind. Anstelle eines Walzenrostes kann auch ein Schubrost vorgesehen werden. Der zu verbrennende Abfall wird über einen Aufgabetrichter 8 und einen Schubförderer 9 aufgegeben und bildet auf dem Verbrennungsrost 1 ein Bett 10. Dieses Bett 10 wird durch eine Rotation der Rostwalzen 7 über den Verbrennungsrost 1 zu einem Abwurf 15 gefördert.

Ein Teil der zur Verbrennung des Abfalls erforderlichen Verbrennungsluft wird durch Unterwindkanäle 11 unterhalb des Verbrennungsrostes 1 zugeführt und tritt durch den Verbrennungsrost 1 in das Bett 10 ein. Die restliche Verbrennungsluft wird als Sekundärluft den Feuerraum 2 und/oder in die sich an den Feuerraum 2 anschließende Nachbrennzone 5 eingeblasen.

In der Feuerraumdecke 4 und/oder der Rückwand 3 des Feuerraumes 2 sind Lanzen 12 angeordnet. Weitere Lanzen 12 können in den Seitenwänden an den mit 13 gekennzeichneten Einbauorte eingebaut sein. Durch die Lanzen 12 wird eine verdampfende, Additive enthaltende Flüssigkeit, vorzugsweise Wasser eingeblasen. Jede Lanze 12 ist mit einer oder mehreren Zerstäuberdüsen versehen, der die einzublasende Flüssigkeit zugeführt wird. Die Zerstäuberdüsen können zusätzlich mit Dampf oder Druckluft als Zerstäubermedium beaufschlagt werden. Günstig ist ein Einbau der Lanzen 12 in einer Position, daß die Lanzenmündungen plan mit den Feuerraumwänden abschließen.

Die Flüssigkeit wird in den Teil des Feuerraumes 2 eingeblasen, in dem Rauchgastemperaturen von mehr als 950 bis 1050 °C zu erwarten sind. Zu diesem Zweck sind die Lanzen 12 unter einen entsprechenden Winkel in den Feuerraum 2 gerichtet. Außerdem ist der Strahlimpuls der durch die Lanzen 12 eingebrachten Flüssigkeitsstrahlen durch die Gestaltung der Zerstäuberdüsen und gegebenenfalls durch die Wahl des Druckes des Zerstäubermediums entsprechend anzupassen. Dabei ist ein Auftreffen der Flüssigkeit auf die Ausmauerung des Feuerraumes 2 oder auf andere feste Wände zu vermeiden, da Wärmespannungen auftreten können, die zu Schädigungen führen.

Das Tropfenspektrum der zerstäubten Flüssigkeit kann verhältnismäßig grob sein, da die Flüssigkeitstropfen weit in den Feuerraum 2 gelangen sollen. Zur Erreichung dieses Zerstäubungsgrades wird ein Öffnungswinkel des Flüssigkeitsstrahles von 10 bis 60 Grad eingestellt. Für die Zerstäubung der Flüssigkeit können Zerstäuberdüsen bekannter Bauart verwendet werden. Die Zerstäuberdüsen sind aus einem warmfesten keramischen Werkstoff, z. B. Silicium-Carbid gefertigt und halten dadurch auch höheren Wärmeeinwirkungen durch Strahlung aus dem Feuerraum 2 stand. Zur Vermeidung von Inkrustierungen an der Mündung der Düsen bzw. Lanzen 12 kann die Verwendung eines Luftschleiers zur Abschirmung der Lanzenmündung von den heißen Rauchgase aus dem Feuerrauminneren vorteilhaft sein. Die Zerstäubungsluft und die Schleierluft kann die für die Verbrennung des Abfalls bestimmte Sekundärluft teilweise oder auch ganz ersetzen.

Die Flüssigkeit verdampft in der heißen Zone des Feuerraumes 2 vollständig. Die in der Flüssigkeit enthaltenen Additive werden nach der Verdampfung der Flüssigkeit freigesetzt oder kristallieren und bilden dadurch sehr feine Keime. Die im Rauchgas vorhandenen, sublimierten, belagbildenden Stoffe lagern sich an diesen Keimen an und werden dadurch unschädlich gemacht.

Als Additive kommen Hydroxide, Oxide, Carbonate oder Hydrogencarbonate von Alkali und/oder Erdalkalimetallen in Frage, die der Flüssigkeit beigemischt werden. Diese Stoffe binden gleichzeitig den im Rauchgas vorhandenen Chlorwasserstoff. Außerdem können natürlich vorkommende oder synthetisch hergestellte Tonschichtminerale, wie Kaolin, Kaolinit, Montmorillonit, Bentonit, Vermiculit, Glimmer, Pyrophillit, oder Mischungen davon eingesetzt werden. Diese Mineralien binden die im Rauchgas sublimierten, belagbildenden Stoffe. Die Additive können auch schon in der Flüssigkeit enthalten sein. Das trifft auf Prozeßwasser zu, das in einer Anlage zur Entschwefelung von Abgasen aus Müllverbrennungsanlagen stammt und das in vorteilhafter Weise verwendet werden kann. Dieses Prozeßwasser ist mit Kalk versetzt und enthält Reaktionsprodukte, z. B. Gips aus dem Abgasentschefelungsprozeß.

Die Dosierung der das Additiv enthaltenden Flüssigkeit ist zu reduzieren oder hat zu unterbleiben, wenn die Temperatur des Rauchgases im Feuerraum 2 derart gering ist, daß ein vollständiger Ausbrand des Mülls nicht sichergestellt sollte. Dies z. B. dann der Fall, wenn die Temperatur des Rauchgases nach der letzten Zugabe der Verbrennungsluft den Wert von 850°C unterschreitet. In diesem Fall ist die Dosierung der Additive enthaltenden Flüssigkeit nicht erforderlich, da die Bildung der belagbildenden Substanzen bzw. deren Überführung in die Gasphase bei diesen Temperaturen nicht auftritt. Eine Überwachung der Temperatur des Rauchgases erfolgt durch einen Meßfühler 14, der am Austritt des Rauchgases aus dem Feuerraum 2 oder in dem ersten Kesselzug angeordnet ist. Die Temperaturüberwachung kann auch durch ein Thermographiesystem, insbesondere durch ein bildgebendes Thermographie-System erfolgen, welches in einer der Feuerraumwände oder der Feuerraumdecke 4 untergebracht sein kann.

## Patentansprüche

1. Verfahren zur Behandlung von Rauchgas aus einer Verbrennungsanlage, in der Abfall auf einem Verbrennungsrost verbrannt wird und das Rauchgas aus einem sich oberhalb des Verbrennungsrostes befindlichen Feuerraumes einem Abhitzekessel zugeführt wird, dadurch gekennzeichnet, daß in den Teil des Feuerraumes, in dem Temperaturen des Rauchgases von mehr als 950 bis 1050 °C zu erwarten sind, eine verdampfende Flüssigkeit, vorzugsweise Wasser eingeblasen und verdampft wird und daß die Flüssigkeit Additive enthält, die nach der Verdampfung der Flüssigkeit als Keime für im Rauchgas vorhandene und bei niedrigeren Temperaturen desublimierende Stoffe wirken.

2. Verfahren nach Anspruch 1, dadurch gekennzeichnet, daß die Additive Hydroxide, Oxide, Carbonate oder Hydrogencarbonate von Alkali- und/oder Erdalkalimetallen sind.

3. Verfahren nach Anspruch 1, dadurch gekennzeichnet, daß die Additive natürlich vorkommende oder synthetisch hergestellte Schichtsilicate oder Zweischicht- oder Dreischichttonminerale wie Kaolin, Kaolinit, Montmorillonit, Bentonit, Vermiculit, Glimmer, Pyrophillit und andere Tonschichtminerale oder Mischungen dieser Mineralien sind.

4. Verfahren nach Anspruch 1, dadurch gekennzeichnet, daß als Wasser ein verbrauchtes Prozeßwasser verwendet wird, das in einer Anlage zur Entschwefelung von Abgasen aus Müllverbrennungsanlagen stammt und kalkhaltig ist und/oder Reaktionsprodukte aus dem Entschwefelungsprozeß enthält.

5. Verfahren nach einem der Ansprüche 1 bis 4, dadurch gekennzeichnet, daß die Temperatur des Rauchgases im Feuerraum oder beim Austritt des Rauchgases aus dem Feuerraum bestimmt wird und daß die Zufuhr von Wasser unterbrochen wird, wenn die Temperatur einen vorgegebenen Wert unterschritten hat.
